# EUROPÄISCHE PATENTSCHRIFT

(11) **EP 3 047 929 B1**
(45) Veröffentlichungstag und Bekanntmachung des Hinweises auf die Patenterteilung: **10.06.2020**
(21) Anmeldenummer: 15002944.5
(22) Anmeldetag: 15.10.2015
(51) Int. Cl.: B23B 51/06, B23B 51/10

(54) **MINIATURISIERTES ENTGRAT- UND/ODER FASWERKZEUG MIT INNENKÜHLUNG**
MINIATURISED DEBURRING AND/OR CHAMFERING TOOL WITH INTERNAL COOLING
OUTIL D'EBAVURAGE ET/OU DE CHANFREINAGE MINIATURISÉ AVEC REFROIDISSEMENT INTERNE

(30) Priorität: 22.01.2015 DE 102015000797
(43) Veröffentlichungstag der Anmeldung: 27.07.2016
(73) Patentinhaber: HEULE Werkzeug AG, 9436 Balgach (CH)
(72) Erfinder: Studer, Harry, 9436 Balgach (CH); Fässler, Roman, 9437 Marbach (CH)
(74) Vertreter: Riebling, Peter

(56) Entgegenhaltungen:
- EP-A1- 2 589 451
- WO-A1-2013/135383
- DE-B4- 10 333 194
- US-B1- 6 238 150

## Beschreibung

Die Erfindung betrifft ein miniaturisiertes Entgrat- und/oder Faswerkzeug mit Innenkühlung nach dem Oberbegriff des Patentanspruchs 1. Ein derartiges Entgrat- und/oder Faswerkzeug ist beispielsweise mit dem Gegenstand der EP 2 589 451 A1 bekannt geworden.

Bei solchen Entgratwerkzeugen, wie sie zum Beispiel zum Entgraten oder zum Anfasen von Bohrungsdurchmessern kleiner als 4 mm verwendet werden, hat sich die Kühlung des Schneidkopfes und die Abfuhr von Späne vom Schneidkopf als problematisch heraus gestellt.

Es wurde festgestellt, dass die Späneabfuhr bei solchen miniaturisierten Entgrat- und Faswerkzeugen schwierig ist, weil trotz der Miniaturisierung des Schneidkopfes relativ große Spanvolumina anfallen. Es fallen Späne im Bereich von 0,2 mm bis 1mm bei einem Schneidkopfdurchmesser von 1,2 mm an.

Hieraus ergibt sich, dass auch bei miniaturisierten Schneidköpfen relativ große Spanvolumina anfallen, deren Länge etwa dem Durchmesser des Schneidkopfes entspricht. Darüber hinaus besteht ein großes Problem bezüglich der Späneabfuhr und in der Kühlung der miniaturisierten Teile. Einmal fehlt es an der erforderlichen Wärmeableitung an den miniaturisierten Schneidköpfen nach hinten zum Werkzeugkörper und zum zweiten wird die Schmutz- und Späneabfuhr dadurch beeinträchtigt, dass am Werkzeug nur kleine Querschnitte vorhanden sind, in denen die bewegten Teile des Schneidapparates angeordnet und geführt sind, die sich mit Späne und Schmutz voll setzen und die zudem noch schwer zu reinigen sind. Dies führt zu einem Verklemmen der bewegten Teile des Entgratwerkzeuges, zu einer Beeinträchtigung der Funktion und zu einer ungenügenden Prozesssicherheit.

Kühlmittel-durchströmte Entgratwerkzeuge sind in vielfältigen Ausführungen bekannt. In der US 5927911A1 wird ein Entgratwerkzeug beschrieben, bei dem der Kühlmittelstrom zentrisch in axialer Richtung das Entgratwerkzeug durchfließt. Er ist auf ein in einer horizontalen Achse schwenkbar gelagertes Entgratwerkzeug gerichtet. Wegen der Lagerung des Entgratmessers in einer horizontalen Achse am Vorderteil des Entgratwerkzeuges ist eine weitere Miniaturisierung des Entgratwerkzeuges nicht möglich.

Der gleiche Nachteil gilt auch für das aus der DE 102 15 004 A1 bekannte Entgratwerkzeug. Der das Entgratwerkzeug in axialer Richtung zentrisch durchfließende Kühlmittelstrom trifft an der vorderen Spitze des Entgratwerkzeuges auf eine Ablenkfläche, die den Kühlmittelstrom in radialer Richtung auswärts auf die beiden einander gegenüberliegenden, schwenkbaren Entgratmesser richtet. Wegen der Anordnung von zwei gegenüberliegenden, in jeweils horizontalen Achsen schwenkbar gelagerten Entgratmessern ist eine weitere Miniaturisierung nicht möglich.

Die WO 9605928 A1 beschreibt ein unter der Wirkung der Fliehkaft ausschwenkbares Entgratmesser, das mittels einer Druckfeder in seiner eingeschwenkten Stellung gehalten wird. Das Entgratmesser ist in einer horizontalen Achse schwenkbar am Grundkörper des Werkzeuges gehalten und die Ausschwenkung wird durch einen auf das Entgratmesser gerichteten Kühlmittelstrom unterstützt.

Bei allen drei oben genannten Druckschriften besteht somit der Nachteil, dass die Schwenkachse des jeweiligen Entgratmessers senkrecht zur Längsachse des Werkzeuges angeordnet ist.

Dies verbietet eine weitere Miniaturisierung des Werkzeuges, denn die senkrecht zur Längsachse des Werkzeuges angeordnete Schwenk- oder Drehachse benötigt eine konstruktiv notwendige Einbaubreite an der Spitze des Werkzeuges, die deshalb nicht verkleinert war ist.

Der Erfindung liegt deshalb die Aufgabe zugrunde, ein miniaturisiertes Entgrat- und/oder Faswerkzeug der eingangs genannten Art so weiterzubilden, dass die Prozesssicherheit erhöht wird, sodass eine ausreichende Kühlung des Schneidkopfes auch bei kleinen Durchmessern des Schneidkopfes von unter 2 mm gewährleistet ist, wobei eine einwandfreie Span- und Schmutzabführung gewährleistet ist.

Zur Lösung der gestellten Aufgabe ist die Erfindung durch die technische Lehre des Anspruches 1 gekennzeichnet.

Der Begriff "miniaturisiertes Entgratwerkzeug" bedeutet bei der Erfindung, dass die vom Entgrat- oder Fasmesser erzeugte Spanlänge etwa dem Schneidkopfdurchmesser entspricht. Das Verhältnis von Spanlänge zum Schneidkopfdurchmesser liegt demnach im Bereich zwischen 1:1 bis 1:3. Weiter bedeutet dieser Begriff, dass der Durchmesser des Schneidkopfs des Werkzeuges unter 4 Millimeter, vorzugsweise unter 2 Millimeter liegt

Wesentliches Merkmal der Erfindung ist, dass der das Entgrat- oder Fasmesser aufnehmende Grundkörper des Werkzeuges mindestens teilweise in Längsrichtung vom Kühlmittel umströmt und/oder durchströmt ist, dass das Entgratmesser blattförmig ausgebildet in einem mindestens halboffenen Aufnahmeschlitz des Messerhalter-Grundkörpers bewegbar aufgenommen ist und dass auch der Aufnahmeschlitz vom Kühlmittel durchströmt ist.

Bei der gegebenen technischen Lehre ergibt sich der Vorteil, dass erstmals ein miniaturisiertes Entgrat- und/oder Faswerkzeug mit einer Innenkühlung durch ein Kühlmittel vorgesehen ist, das für eine zuverlässige Späneabfuhr im Bereich des spanabhebenden Entgrat- oder Fasmessers sorgt. Darüber hinaus ist vorgesehen, dass die Kühlmittelführung längs der bewegten Teile des Entgrat- oder Fasmessers erfolgt, sodass deren Arbeits- und Bewegungsbereich gekühlt und gespült wird, und ein Eindringen von Späne in diese Bereich von vorneherein vermieden wird.

Es ist auch vorgesehen, dass das Entgrat- oder Fasmesser in seiner Aufnahmehalterung für das Entgrat- oder Fasmesser, insbesondere in seinem Aufnahmeschlitz im Grundkörper des Werkzeuges, von Kühlmittel umflossen ist, das im Grundkörper in Längsrichtung nach vorn bis zum Schneidkopf geführt wird.

Durch die Tatsache, dass das Entgrat- oder Fasmesser mit seiner Schwenkachse nunmehr parallel - und nicht senkrecht - zur Längserstreckung des Messerhalter-Grundkörpers gelagert ist, ergibt sich erstmals die Möglichkeit der Miniaturisierung des Entgrat- oder Faswerkzeuges im Vergleich zu den drei vorgenannten Kühlmittel-durchströmten Entgratwerkzeugen. Durch die parallele Führung des blattförmigen Entgrat- oder Fasmessers in einem sich in axialer Richtung erstreckenden Aufnahmeschlitz des Messerhalter-Grundkörpers entstehen jedoch bei solchen miniaturisierten Werkzeugen im Hinblick auf die Kühlung und der Späneabfuhr neue Probleme.

Zur Lösung dieser Probleme sieht die Erfindung nun eine zusätzliche Spülung des Aufnahmeschlitzes im Messerhalter-Grundkörper vor und gleichzeitig wird das blattförmige Entgrat- oder Fasmesser von allen vier Seiten vom Kühlmittel umströmt.

In einer bevorzugten Ausgestaltung der Erfindung ist eine Kühlmittelhülse zur Führung des Kühlmittels vorgesehen, welche das aus der DE 103 33 194 B4 bekannte Entgratwerkzeug im Bereich des Werkzeug-Vorderteils in der Art einer Hülse umgibt, um so am Innenumfang des Werkzeuges eine Kühlmittelführung zu ermöglichen, die dafür sorgt, dass der Messeraufnahmeschlitz für das Entgratmesser im Messerhalter-Grundkörper vom Kühlmittel in Längsrichtung durchströmt wird. Gleichzeitig wird auch das Entgrat- oder Fasmesser selbst vom Kühlmittel beströmt und der in Längsrichtung gerichtete Kühlmittelstrom strömt über den Schneidkopf hinaus und beströmt dort den Schneidkopf sowohl in radialer als auch in axialer Richtung.

Mit der axialen Spülung des Schneidkopfes wird erreicht, dass sich im Aufnahmeschlitz des Messerhalter-Grundkörpers festsetzende Späne, die die Funktion des Messers beeinträchtigen könnten, frei gespült werden und ferner wird der Schneidkopf selbst von anhaftenden Spänen frei gespült.

Gleichzeitig ist die Kühlmittelhülse an ihrer vorderen Durchlassöffnung so ausgebildet, dass sowohl ein in axialer Richtung gehender als auch in radialer Richtung gerichteter Kühlmittelstrom ausgestoßen wird, so dass sowohl eine radiale als auch axiale Spülung des Schneidkopfes des Messers gewährleistet ist. Mit der gegebenen technischen Lehre wird eine wesentliche Erhöhung der Prozesssicherheit gewährleistet, und es wird eine einwandfreie Bewegung des Entgratmessers im Aufnahmeschlitz des Grundkörpers gewährleistet, weil der Aufnahmeschlitz stets von Spänen und Schmutz frei gespült wird.

In einer bevorzugten Ausgestaltung ist das Entgratmesser als länglicher, blattförmiger Körper ausgebildet, an dessen vorderen freien Ende der Schneidkopf in miniaturisierter Form angeordnet ist.

Bei der Erfindung wird der Aufnahmeschlitz für ein federnd gehaltenes Entgratmesser oder Fasmesser für die Kühlmittelführung verwendet.

In den oben beschriebenen Ausführungen erfolgt die Innenkühlung des blattförmigen, etwa rechteckförmig profilierten Messers und eine Späneabfuhr vom Messer dadurch, dass das Messer im Aufnahmeschlitz an allen vier Seiten vom Kühlmittel umströmt ist. Die zwei Flachseiten des blattförmigen Messers sind die Führungs- und Lagerflächen an den gegenüberliegenden Flächen im Messerhalter-Grundkörper. Dadurch ergeben sich an diesen Flachseiten nur geringe Durchströmungsquerschnitte, die aber dadurch vergrößert werden können, dass entweder in den Flachseiten des Messers und/oder in den gegenüberliegenden Führungsflächen des Messerhalter-Grundkörpers zusätzliche, flüssigkeitsführende Nuten angeordnet sind, die in axialer Richtung ausgerichtet sind.

An den einander gegenüberliegenden Schmalseiten sind große Durchströmquerschnitte dadurch gebildet, dass die Höhe des Messers (der Abstand zwischen den beiden Schmalseiten des Messers) kleiner ist als die lichte Höhe des Aufnahmeschlitzes.

Zusätzlich ist vorgesehen, dass auch der Messerhalter-Grundkörper an allen vier Seiten - also in axialer Richtung bevorzugt über seinen gesamten Umfang vom Kühlmittel umströmt ist. Soweit der Messerhalter-Grundkörper zur Ausrichtung und Zentrierung mit geringem radialen Spiel in einem Ansatz der Werkzeug-Führungshülse aufgenommen ist, sind in diesem Bereich Abflachungen und/oder Längsnuten im Bereich des Ansatzes und/oder dem Messerhalter-Grundkörper angeordnet, die eine freie Durchströmung des Kühlmittels ermöglichen.

Andere Entgratmessertypen sind ebenfalls für den Erfindungsgedanken nutzbar, und zwar solche Entgratmesser, bei denen entweder das Federelement im Grundkörper geführt ist und dort ein gewisses Bewegungsspiel im Grundkörper aufweist oder die Entgratmesser im Grundkörper selbst federnd oder schwenkbar gelagert sind.

Die Erfindung sieht vor, dass die im Grundkörper eines Entgrat- und/oder Faswerkzeuges angeordneten axialen Längsschlitze, die zur Halterung des Entgratmessers und/oder zur Führung des Federelementes dienen, für die Führung des Kühlmittels in Richtung zum Schneidkopf genutzt werden.

Die Erfindung ist demnach nicht auf ein Entgratmessers des Typs beschränkt, wie er nachfolgend in den Ausführungsbeispielen dargestellt ist, sondern gilt für sämtliche miniaturisierten Entgrat- und/oder Faswerkzeuge, bei denen erstmals eine Innenkühlung vorgeschlagen wird, die darin besteht, dass die Halterungs- oder Führungsteile für entweder das Federelement und/oder das Entgratmesser selbst für die Führung des Kühlmittels in Richtung auf den Schneidkopf verwendet werden.

Wichtig ist, dass die Halterung der Biegefeder im Bereich der Führungshülse als Führungskanal für die Kühlflüssigkeit in Richtung auf das Messerfenster genutzt wird. Dies verwirklicht den Erfindungsgedanken der Erfindung, weil die bewegten Teile des Entgrat- oder Faswerkzeuges in axialer Richtung vom Kühlmittelstrom durchspült werden.

Ein Entgratwerkzeug ist dabei ein Werkzeug, welche zum Entgraten von Bohrungsrändern bestimmt ist.

Ein Faswerkzeug ist ein Werkzeug, welches zur Anbringung von Fasen an Bohrungsrändern geeignet ist. Beide Ausführungsformen werden von der vorliegenden Erfindung umfasst und der einfacheren Beschreibung wegen wird in der folgenden Beschreibung lediglich von einem "Werkzeug" ausgegangen, welches demzufolge entweder als Entgrat- und/oder als Faswerkzeug ausgebildet sein kann.

Derartige Werkzeuge werden drehend angetrieben und haben Umdrehungszahlen im Bereich von 800 bis 10.000 Umdrehungen pro Minute.

Je kleiner das Werkzeug ist, desto größere Probleme entstehen bei der Kühlung (Wärmeabfuhr) und bei der Spanbildung.

Deshalb werden die erfindungsgemäßen Maßnahmen bevorzugt bei miniaturisierten Werkzeugen verwendet, wie sie im Bohrungsdurchmesserbereich von kleiner als 4 mm vorhanden sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht einer Ausführungsform eines Entgratmessers nach der Erfindung
- Figur 2:: die explosionsartige Zerlegung des Werkzeuges nach Figur 1
- Figur 3:: ein Schnitt in einer ersten Ebene des Entgratwerkzeuges nach Figur 1 und 2
- Figur 4:: eine vergrößerte Detaildarstellung des Schneidkopfes des Werkzeuges nach Figur 3
- Figur 5:: ein um 90° versetzter Schnitt durch das Werkzeug
- Figur 5a:: die Führung des Kühlmittels in vereinfachter Darstellung
- Figur 6:: ein Schnitt gemäß der Linie VI-VI in Figur 4
- Figur 7:: ein Schnitt gemäß der Linie VII-VII in Figur 3
- Figur 8:: eine perspektivische Ansicht eines Entgratmessers
- Figur 9:: die vergrößerte Detailansicht des Schneidkopfes des Entgratmessers nach Figur 8
- Figur 10:: eine schematisierte Darstellung eines anderen Werkzeuges zum Entgraten mit Führung des Kühlmittels

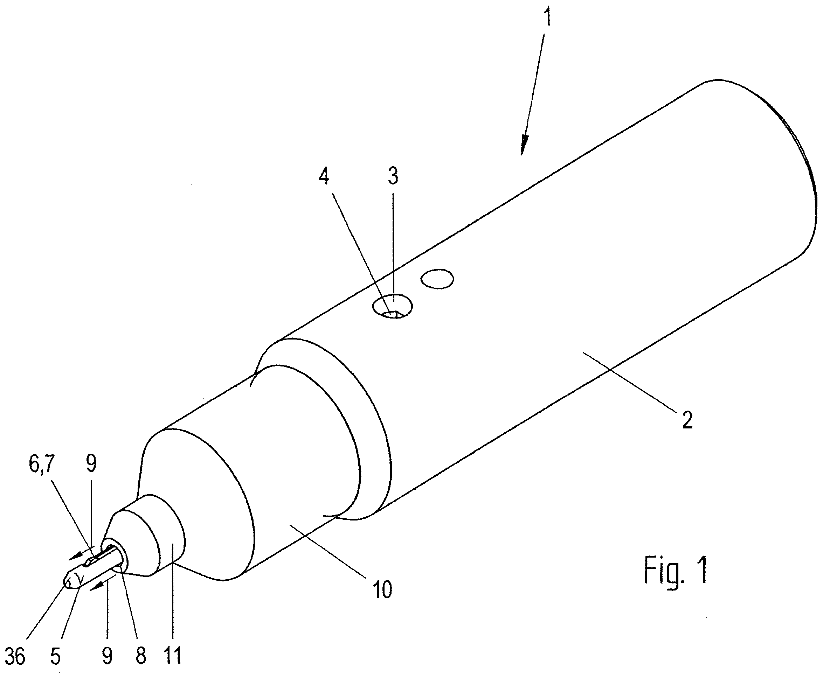

In Figur 1 ist in perspektivischer Darstellung eine erste Ausführungsform eines Werkzeuges 1 dargestellt, das im Wesentlichen aus einer etwa rund-zylindrischen Führungshülse 2 besteht, an deren vorderen Ende eine Kühlmittelhülse 10 angeordnet ist, die in einen zylindrischen Ansatz 11 verringerten Durchmessers übergeht.

Aus dem vorderen, zylindrischen Ansatz 11 ragt der Schneidkopf 7 des Werkzeuges 1 heraus, wobei in der gezeigten Ausführungsform noch sichtbar ist, dass der Grundkörper 5, welcher das Messer 6 aufnimmt, in einer Spitze 36 endet und das Kühlmittel aus einer am vorderen Ende des Ansatzes 11 angeordneten Durchlassöffnung 8 in axialer Pfeilrichtung 9 und auch in radialer Richtung ausströmt und den Schneidkopf 7 mit den dort angeordneten Schneidkanten durchströmt und von Spänen und Schmutz freihält.

Wichtig ist, dass das Kühlmittel nicht nur das Messer 6 überströmt, sondern auch noch den Aufnahmeschlitz 20 durchströmt (Stichwort Innenkühlung), in dem das Messer 6 aufgenommen ist.

Hier wird in den späteren Zeichnungen noch eingegangen.

Es wird noch angemerkt, dass der Grundkörper 5 mit Hilfe einer Spannschraube 4 gehalten ist, die in einer Bohrung 3 in der Führungshülse 2 eingeschraubt ist.

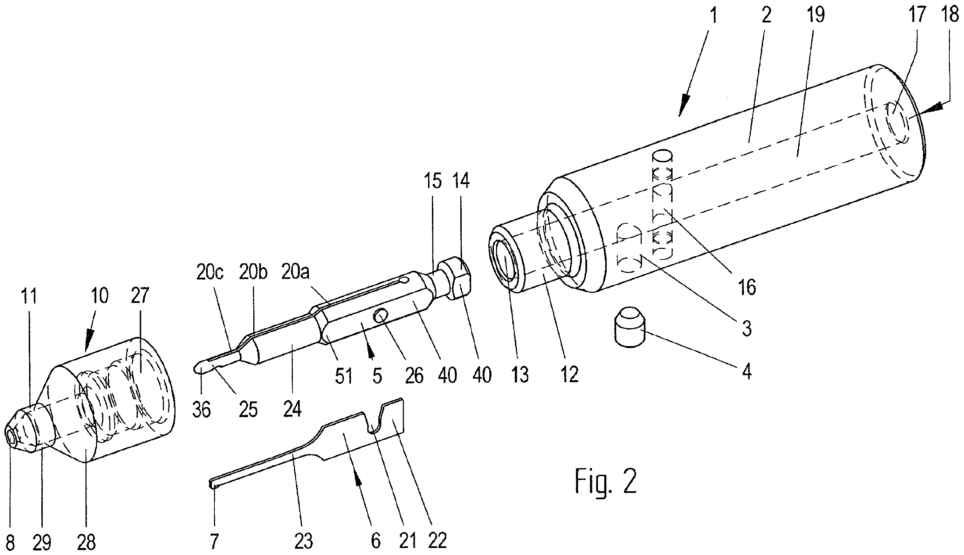

Die Figur 2 zeigt die explosionsartige Zerlegung des Werkzeuges 1 nach Figur 1.

Dort ist erkennbar, dass im Ausführungsbeispiel die zylindrische Führungshülse 2 an der hinteren Stirnseite ein Kühlmitteleinlass 17 aufweist, in den das Kühlmittel in Pfeilrichtung 18 unter Druck eingelassen wird. Die Erfindung ist hierauf nicht beschränkt.

In einer anderen Ausgestaltung kann es vorgesehen sein, dass der Kühlmitteleinlass radial am Außenumfang der Führungshülse 2 oder direkt auf der Kühlmittelhülse 10 erfolgt oder auch in anderen Bereichen, insbesondere dem zylindrischen Ansatz 12 der Führungshülse 2.
Im gezeigten Ausführungsbeispiel ist ferner erkennbar, dass in der Führungshülse 2 ein Anschlag 16 in Form eines Querbolzens vorhanden ist, so dass das Entgratmesser 6 aufnehmende Grundkörper 5 in axialer Richtung nach hinten anschlägt.

Der Kühlmittelkanal 19 ist vorzugsweise im Zentrum der zylindrischen Führungshülse 2 angeordnet. Die Erfindung ist hierauf nicht beschränkt. Es können neben dem in axialer Richtung geführten, zentrischen Kühlmittelkanal 19 auch einzelne in Längsrichtung gehende Bohrungen, Rippen oder andere halboffene oder geschlossene Führungskanäle für das Kühlmittel in Richtung auf das vordere Ende der Führungshülse 2 vorgesehen werden.

Der das Messer 6 aufnehmende Messerhalter-Grundkörper 5 ist im Wesentlichen ebenfalls kreiszylindrisch ausgebildet und weist einen hinteren Befestigungsansatz 14 auf, mit dem der Grundkörper in axialer Richtung nach hinten am Anschlag 16 anschlägt.

An dem Befestigungsansatz 14 größeren Durchmessers schließt sich eine Ringnut 15 kleineren Durchmessers an, in welche die Spannschraube 4 eingreift und somit den Grundkörper 5 auswechselbar in axialer Richtung in der Führungshülse 2 befestigt.

An die Ringnut 15 verringerten Durchmessers schließt sich ein Teil des Grundkörpers 5 an, der einen größeren Durchmesser aufweist, in dessen Oberfläche ein erster Teil eines Aufnahmeschlitzes 20a vorgesehen ist, der sich von hinten aus durch die gesamte Längserstreckung des Grundkörpers 5 nach vorne in Form der axial verlaufenden Aufnahmeschlitze 20b, 20c erstreckt.

Der Aufnahmeschlitz 20 hat drei in axialer Richtung hinter einander verlaufende, ineinander übergehende Unterteilungen 20a, 20b, 20c, die flüssigkeitsleitend miteinander verbunden sind und setzt sich bis nach vorne in den Teil 25 verringerten Durchmessers fort, der über einen Konusansatz in einen sich in axialer Richtung anschließenden Teil 24 vergrößerten Durchmessers übergeht.

Quer zur Längserstreckung des Messerhalter-Grundkörpers 5 ist ein Querbolzen 26 angeordnet, auf dem das Messer 6 mit einem Einschnitt 21 greift und dort axial gegen Verschiebung gesichert gehalten ist.

Im gezeigten Ausführungsbeispiel besteht das Messer 6 aus einem blattförmigen Metallteil, das aus einem Federmaterial gebildet ist und aus einem hinteren, größeren Blattkörper 22 besteht, in dessen Bereich der Einschnitt 21 angeordnet ist.

Der Blattkörper, der etwa Rechteckquerschnitt hat und relativ schmal ausgebildet ist, geht nach vorne in einen vorne sich anschließenden, federnd biegbaren Messerhals 23 verringerter Breite über, wobei der Schneidkopf 7 am vorderen freien Ende des Messerhalses 23 angeordnet ist.

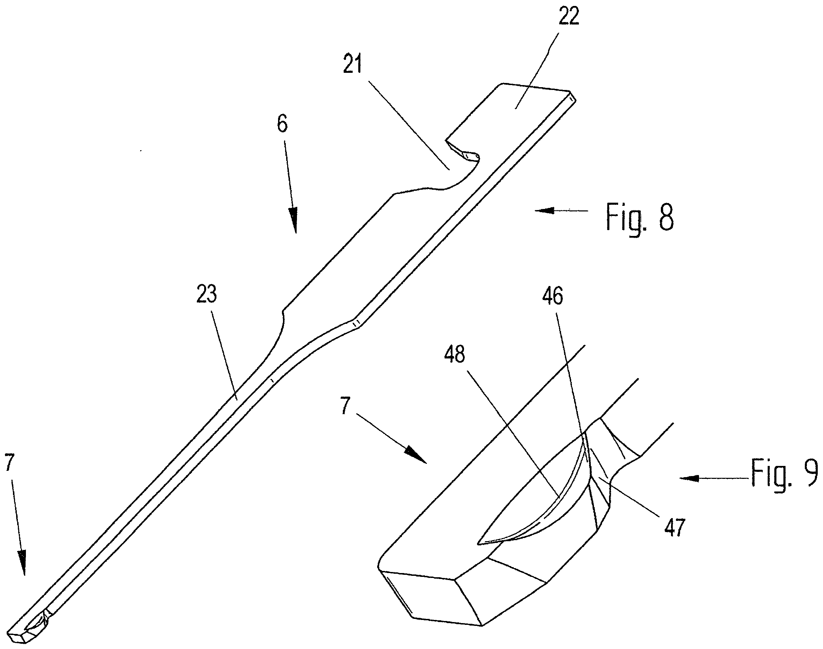

Eine vergrößerte Darstellung dieses Messers ist in Figur 8 und 9 gezeigt. Dort ist noch die besondere Geometrie des Schneidkopfes dargestellt ist. Es ist erkennbar, dass der Schneidkopf 7 durch eine in einer ersten Ebene schräg verlaufende Schneidkante 46 gebildet ist, an die sich in einer zweiten Ebene eine Freifläche 47 anschließt und die Schneidkante 46 wiederum in eine Spanfläche 48 in einer dritten Ebene übergeht.

Somit ist der Schneidkopf 7 zum Entgraten in einer bestimmten Drehrichtung des Werkzeuges geeignet, wobei der Drehsinn des Werkzeuges im gezeigten Ausführungsbeispiel im Uhrzeigersinn ist.

Dies bezieht sich auf ein Rückwärtsschneiden des Schneidkopfes, was von der Lage der Schneidkante 46 abhängt.

Es kann auch in einer anderen, nicht zeichnerisch dargestellten Ausführungsform vorgesehen sein, dass ein Vorwärtsschneiden mit einer anders ausgebildeten Schneidkante 46 erfolgt.

Ebenso ist die Erfindung nicht auf die Anordnung eines einzigen Messers 6 als Flachmesser beschränkt. Es können auch mehrere Messer in einem gemeinsamen Grundkörper angeordnet werden, insbesondere zwei sich diametral gegenüberliegende Messer 5 in der Ausbildung als Flachmesser.

Der Grundkörper 5 wird ebenfalls in der zylindrischen Aufnahme 13 der Führungshülse 2 aufgenommen und mit Hilfe der Spannschraube 4 festgelegt.

Wichtig ist nun, dass das in Pfeilrichtung 18 strömende Kühlmittel durch den zylindrischen Ansatz 12 in der Führungshülse 2 hindurchströmt und über eine erste Abflachung 40 in den dort mit geringem radialen Spiel aufgenommenen, rundzylindrischen Ansatz 14 des Messerhalter-Grundkörpers 5 strömt.

Am Außenumfang des Messerhalter-Grundkörpers 5 ist eine zweite, den Durchmesser in diesem Bereich vermindernde Abflachung 40 vorgesehen, die sich in axialer Richtung an die erste Abflachung 40 axial fluchtend anschließt, so dass der Kühlmittelstrom seitlich am Messerhalter-Grundkörper 5 vorbeiströmt und über einen sich in axialer Richtung an die zweite Abflachung 40 anschließenden Konusansatz 51 verringerten Durchmessers strömt.

Der Konusansatz 51 verringerten Durchmessers bildet den Außenumfang des Messerhalter-Grundkörpers 5 in diesem Bereich und geht koaxial in einen zylindrischen Ansatz 24 über, wo das Kühlmittel in einen ringsum laufenden Ringraum 31 gelangt und sich dort um den gesamten Umfang des Grundkörpers 5 herum verteilt. Der Ringraum 31 wird durch den Innenumfang einer Kühlmittelhülse 10 und dem Außenumfang des zylindrischen Teils 24 des Messerhalter-Grundkörpers 5 gebildet.

Zur Führung des Kühlmittels und zur Sicherung, dass das Kühlmittel nicht in radialer Richtung nach außen abströmt, ist eine Kühlmittelhülse 10 vorgesehen, die mit einem zugeordneten Aufnahmegewinde auf einen zugeordneten Gewindeansatz auf dem Ansatz 12 der Führungshülse 2 aufgeschraubt ist. Statt einer Schraubverbindung kann auch eine Steckverbindung oder eine BajonettVerbindung gewählt werden.

Die Kühlmittelhülse 10 umgreift somit vollkommen den Grundkörper 5 mit den im Aufnahmeschlitz 20 gehaltenen Messer 6 und bildet lediglich eine vordere, stirnseitige Durchlassöffnung 8 zum Austritt des Kühlmittels.

Die Kühlmittelhülse 10 besteht im Wesentlichen aus einem rund zylindrischen Teil, das aus Aluminium, Kunststoff oder einem anderen geeigneten Werkstoff besteht. Sie geht von einem größeren Durchmesser ausgehend über einen ersten Konusansatz 28 in einen kleineren Ansatz 11 über, der wiederum über einen weiteren Konusansatz 29 in die vordere Flachseite übergeht, in der die Durchlassöffnung 8 angeordnet ist.

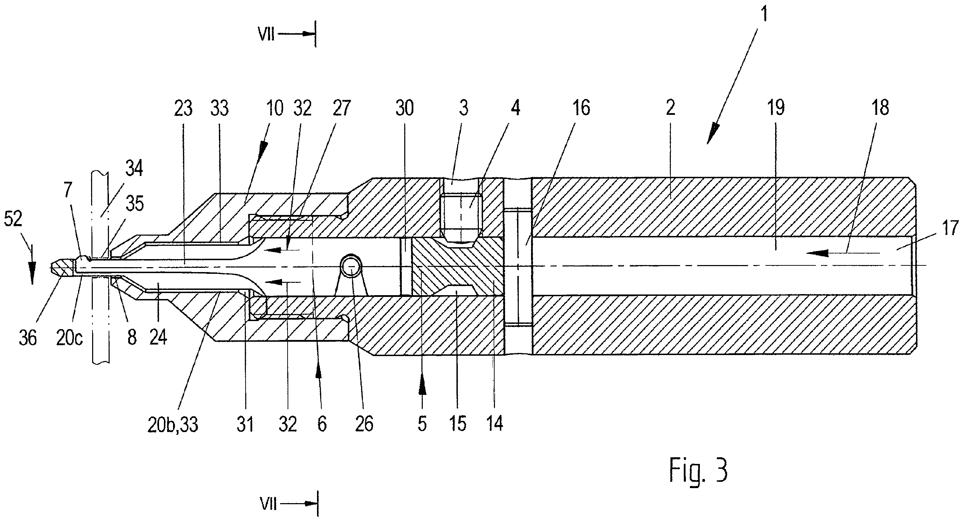

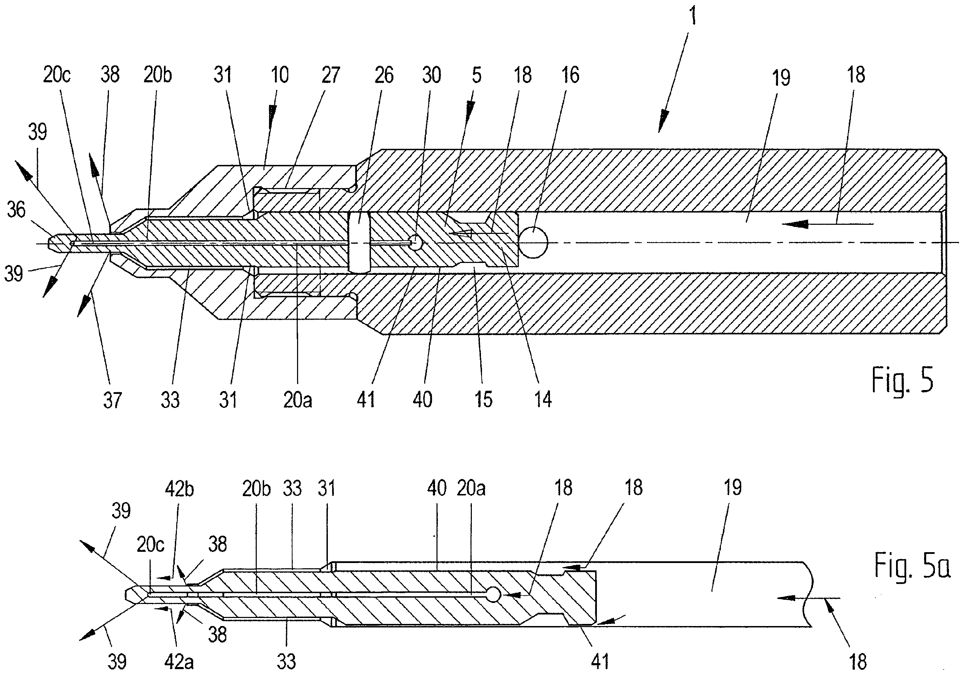

Die Figur 3 zeigt eine erste Schnittebene durch das Werkzeug 1, wo erkennbar ist, dass der Kühlmittelkanal 19 und das dort in Pfeilrichtung 18 geführte Kühlmittel den Anschlag 16 überströmt und in den Bereich des Befestigungsansatzes 14 des Grundkörpers 5 kommt, wobei nicht näher dargestellt ist, wie das Kühlmittel an den unteren Teil des Grundkörpers 5 vorbeiströmt. Dies lässt sich erst aus Figur 5 entnehmen.

Es ist in Pfeilrichtung 32 gestrichelt dargestellt, dass das Kühlmittel in axialer Richtung im Grundkörper 5 im Aufnahmeschlitz 20 entlang strömt und aber auch den Grundkörper von außen umströmt, so dass sowohl eine innen liegende als auch eine außen liegende Umströmung mit Kühlmittel gegeben ist.

Die Durchströmung des Aufnahmeschlitzes 20 wird anhand der Figur 5 später noch näher erläutert.

Aus Figur 3 lässt sich entnehmen, dass auch der Außenumfang des Grundkörpers 5 im Bereich der Durchflusskanäle 33 umströmt wird, die sich in Längsrichtung als Zwischenraum zwischen dem Innenumfang der Kühlmittelhülse 10 und dem Außenumfang des Grundkörpers 5 ergeben.

Lediglich der Vollständigkeit halber ist noch dargestellt, dass das Messer 6 mit seinem hinteren axialen Ende nicht an den Grundkörper 5 anschlägt, sondern dort einen Freiraum 30 vorfindet, dass aber das Messer 5 fast vollständig im Aufnahmeschlitz 20 des Grundkörpers 5 aufgenommen ist und sich dort im Winkel zur axialen Längserstreckung verschwenkt. Erfindungsgemäß ist dieser Aufnahmeschlitz 20 vom Kühlmittel durchströmt, und verhindert dadurch das Eindringen von Späne, die den Schwenkweg des Messers 6 beinträchtigen würden.

Die Federwirkung des Messers 6 zum Entgraten von Bohrungen oder zum Anfasen von Bohrungen erfolgt im Bereich des federnd ausgebildeten Messerhalses 23, der im Aufnahmeschlitz 20 verschwenkt. Er ist im mechanischen Ersatzschaltbild als einseitig eingespannter Biegebalken ausgebildet.

Demzufolge kann der Schneidkopf 7 in radialer Richtung 52 in den Aufnahmeschlitz 20c an der vorderen Spitze 36 des Grundkörpers 5 einschwenken, oder er wird federbelastet in der in Figur 3 gezeigten Entgrat- oder Anfasstellung gehalten und ist somit mit seinem Schneidkopf 7 radial auswärts über der Spitze 36 hinaus stehend herausgefahren.

Die Figur 3 zeigt ferner noch schematisiert ein Werkstück 34 mit einer Bohrung 35, durch welche der Schneidkopf 7 hindurch gefahren ist, wobei die Bohrung 35 in der Rückwärtsbewegung am Bohrungsrand entgratet oder angefast wird.

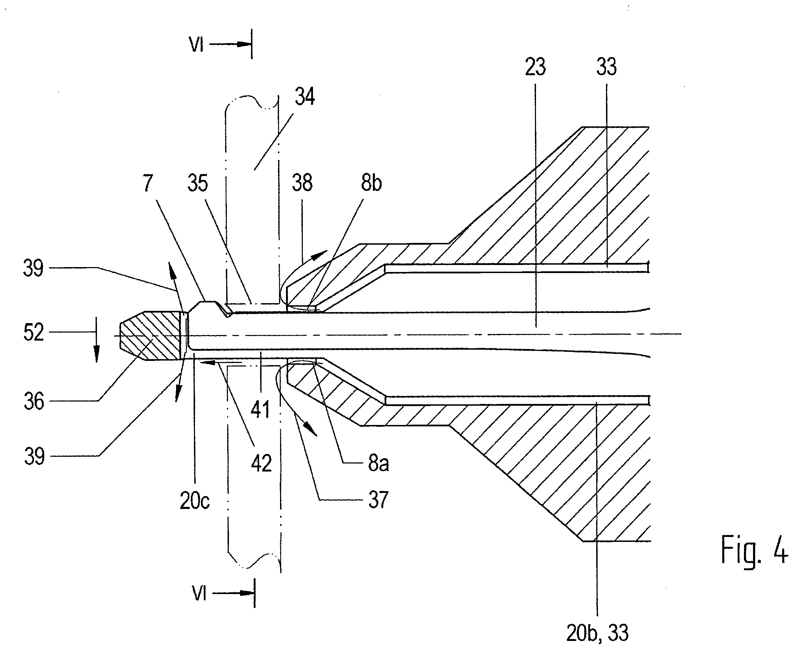

Die Figur 4 zeigt in vergrößerter Darstellung das Details nach Figur 3 mit der Kühlmittelführung im Bereich des Schneidkopfes. Dort ist erkennbar, dass sich der Kanal 33 konisch nach vorne verengt und eine Durchlassöffnung 8b bildet, wobei die eine Durchlassöffnung 8b oben und die andere Durchlassöffnung 8a unten ist. Die Ausbildung der unterschiedlichen Durchlassöffnungen 8a, 8b hängt mit dem Federvermögen des Messerhalses 23 zusammen.

Federt der Messerhals 23 nach oben, dann ist die obere Durchlassöffnung 8a offen und die untere Durchlassöffnung 8b im Wesentlichen verschlossen.

Federt hingegen der Messerhals 23 nach unten in Pfeilrichtung 52, dann öffnet sich die untere Durchlassöffnung 8b, und die obere Durchlassöffnung 8a wird verschlossen.

Es wird noch angegeben, dass die Durchlassöffnungen 8a, 8b in sich am Umfang miteinander verbunden sind, so dass sich eine etwa ovale Formgebung ergibt.

Der Durchflusskanal 33 mündet nach vorne in die Durchlassöffnungen 8a, 8b, die am Umfang durchgehend und flüssigkeitsleitend miteinander verbunden sind, so dass zunächst ein erster Kühlmittelstrahl in Pfeilrichtung 38 aus den Durchlassöffnungen 8a, 8b austritt und dann den hinteren Teil des Messerhalses 23 überströmt und von Späne freihält.

Auf diese Weise wird in diesem Bereich auch der gesamte Aufnahmeschlitz 20, mit dem der Messerhals 23 im Grundkörper 5 sitzt, frei gespült, so dass sich dort keine Späne festsetzen können. Die Pfeilrichtung 38 liegt hinter der Werkstückbohrung 35.

Der Kühlmittelstrahl geht jedoch weiter in Pfeilrichtung 42 und durchströmt einen Längskanal 41, der sich aus dem Außenumfang des Messers 6 und dem Aufnahmeschlitz 20c im Grundkörper 5 ergibt.

Somit strömt der Kühlmittelstrahl auch direkt vorne im Zwischenraum zwischen dem Schneidkopf 7 und der Spitze 36 des Grundkörpers aus, und zwar in der dort eingezeichneten Pfeilrichtungen 39 schräg nach vorne in radialer und auch in axialer Richtung. Auf diese Weise wird dafür gesorgt, dass sich in diesem Bereich keine Späne und kein Schmutz ansetzen können, weil es eine flüssigkeitsleitende Verbindung des Kühlmittels bis zur Spitze 36 des Grundkörpers 5 gibt, wobei das Kühlmittel sowohl den Grundkörper 5 an seinem Außenumfang überströmt als auch im Innenbereich den Aufnahmeschlitz 20, 20a, 20b, 20c entlang strömt, so dass dadurch erfindungsgemäß eine Innenkühlung erfolgt.

In Figur 5 ist ein um 90° im Vergleich zur Figur 3 versetzter Schnitt dargestellt, in dem die Kühlmittelführung erkennbar ist. Das Kühlmittel, welches in Pfeilrichtung 18 den Messerhalter-Grundkörper 5 umströmt, strömt über eine Abflachung 40 des Messerhalter-Grundkörpers 5 am Außenumfang des Messerhalter-Grundkörpers 5 nach vorne und gelangt über den einen Längskanal 41, der durch die Abflachung 40 und dem Innenumfang der Führungshülse 2 gebildet ist. Das Kühlmittel strömt vorwärts bis zum Erreichen eines ringsum laufenden Ringraumes 31, wo sich das Kühlmittel über den gesamten Umfang des Messerhalter-Grundkörpers 5 verteilt und damit auch in den Aufnahmeschlitz 20 eindringt.

Somit wird ab dem Ringraum 31 der Aufnahmeschlitz 20b und der sich flüssigkeitsleitend daran anschließende Aufnahmeschlitz 20c für die bewegliche Aufnahme des Messers 6 in axialer Richtung gespült.

Es ist noch dargestellt, dass das Kühlmittel sowohl hinter der Bohrung in Pfeilrichtung 38 als auch vor der Bohrung in Pfeilrichtung 39 austritt.

Nachdem der Kühlmittelaustritt hinter der Bohrung vom Einfedervermögen des Schneidkopfes 7 abhängt, wurde die Pfeilrichtung 38 von der Pfeilrichtung 37 unterschieden, nachdem das Kühlmittel in diesen Bereichen in zeitlich unterschiedlichen Mengen austritt.

Die Figur 5a zeigt unter Weglassung der Körperkanten des Werkzeuges lediglich die Kühlmittelführung in stark vereinfachter Form. Das Kühlmittel wird somit in axialer Pfeilrichtung 18 durch den zentrischen Kühlmittelkanal 19 nach vorne, gegen die hintere Stirnseite des Messerhalter-Grundkörpers 5 geleitet. Dort wird der Kühlmittelstrom in zwei voneinander getrennte Kühlmittelströme aufgeteilt, wobei ein unterer Kühlmittelstrom in den Längskanal 41 einfließt, der durch die Abflachung 40 am Messerhalte-Grundkörper 5 und der gegenüberliegenden Fläche der Führungshülse 2 gebildet ist.

Der andere Teil des Kühlmittels fließt in Pfeilrichtung 18 weiter in dem Aufnahmeschlitz 20 und zwar in den Beginn des Aufnahmeschlitzes 20a, in dem das blattförmige Messer 6 bewegbar gelagert ist. Die Bewegung des plattenförmigen Messers ergibt sich aus dessen Biegbarkeit. Eine Verschwenkung um eine Lagerachse ist nicht gegeben.

Der Kühlmittelstrom im Aufnahmeschlitz 20 durchfließt somit alle miteinander fluchtend und flüssigkeitsleitend verbundenen Teile 20a, 20b, 20c des Aufnahmeschlitzes 20 im Messerhalter-Grundkörper 5, sodass das dort biegbar gelagerte Messer 6 von allen vier Seiten umströmt wird.

Der vordere Teil 20c des Aufnahmeschlitzes 20 endet nach dem Schneidkopf 7 des Messers 6, sodass der vordere Teil 20c über den Schneidkopf 7 hinaus geht und das Kühlmittel auch in axialer Richtung vor dem Schneidkopf 7 aus dem Aufnahmeschlitz 20c in Pfeilrichtung 39 austritt.

Die Figur 5 zeigt auch den Verlauf des Kühlmittelstrom, der radial auswärts durch den Längskanal 41 fließt und in einem rings umlaufenden Ringraum 31 mündet, von dem in axialer Richtung nach vorn ausgehend die Längskanäle 33 durchströmt werden, die durch den Außenumfang des Messerhalter-Grundkörpers 5 und dem Innenumfang der Kühlmittelhülse 10 gebildet sind. Somit wird das Kühlmittel am Außenumfang des Messerhalter-Grundkörpers 5 in dem rings umlaufenden Durchflusskanal 33 nach vorne in Richtung zum Ausströmende geführt, wo es in den Pfeilrichtungen 37,38 vor dem Schneidkopf 7 des Messers 6 aus der Kühlmittelhülse 10 ausströmt.

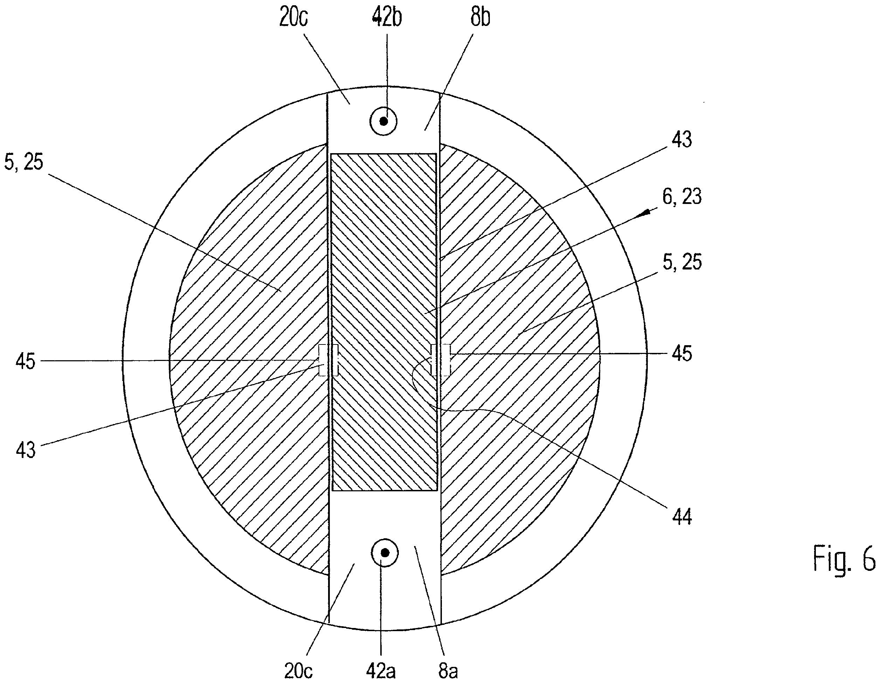

Die Figur 6 zeigt einen Schnitt in Richtung des Pfeils VI-VI in Figur 4 durch den Schneidkopf, wo erkennbar ist, dass durch die Abflachung des Messerhalses 23 hinter dem Schneidkopf 7 Durchströmquerschnitte 20c vorhanden sind. Der zeichnerischen Vereinfachung wegen ist in der Zeichenebene der Figur 6 nicht die Frontansicht auf die Kühlmittelhülse 10 dargestellt.

Ferner ist erkennbar, dass das Kühlmittel neben den großflächigen Durchströmquerschnitten, die bei 8b gezeichnet sind, in Pfeilrichtung 42a, 42b senkrecht zur Zeichenebene ausströmt.

Es ist noch dargestellt, dass auch in den seitlichen Bereichen, wo die Lagerung und Bewegungsführung des Messers 6 stattfindet, zusätzliche Durchlassquerschnitte 43 vorhanden sind, die ebenfalls vom Kühlmittel durchströmt sind. Somit werden auch die Führungsflächen für die Führung des Messers 6 in axialer Richtung gespült werden.

In einer Weiterbildung der Erfindung kann es vorgesehen sein, dass im Messerhalter-Grundkörper 5 in Richtung auf den Durchlassquerschnitt 43, der relativ schmal zur Führung des Messers 6 ausgebildet ist, noch zusätzliche Längsrippen 45 für die Strömungsführung des Kühlmittels vorgesehen sein können.

Neben diesen Längsrippen 45 oder anstatt der Längsrippen 45 kann es auch in einer anderen Ausgestaltung vorgesehen sein, dass ebenfalls im Messer 6 selbst, und zwar im Bereich des Messerhalses 23 längsgerichtete, nach außen geöffnete Längsrippen 44 angeordnet sind, die sich entweder mit den grundkörperseitigen Längsrippen 45 ergänzen können oder auch separat angeordnet sind.

Die gezeigten Merkmale der Bezugszeichen 43, 44, 45 sind lediglich gestrichelt dargestellt, weil sie in optionaler Form vorhanden sein können. Sie können jedoch auch entfallen.

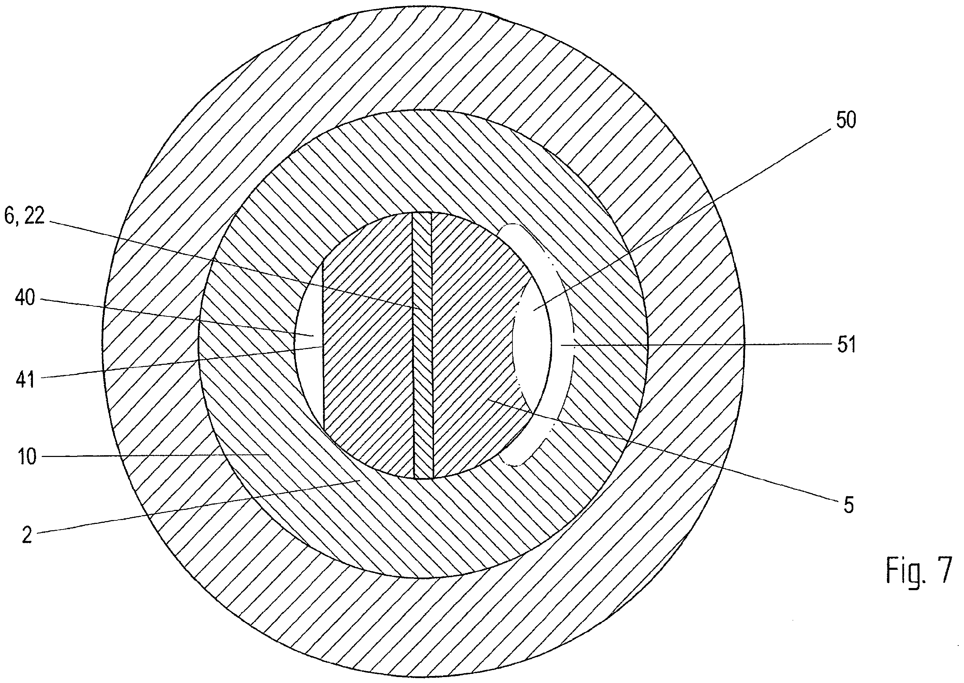

Die Figur 7 zeigt einen Schnitt gemäß der Linie VII-VII in Figur 3, wo durch den Ansatz der Kühlmittelhülse 10 auf der Führungshülse 2 hindurch geschnitten ist. Es soll nochmals die Führung des Kühlmittels am Messerhalter-Grundkörper 5 entlang erläutert werden.

Es ist erkennbar, dass der Messerhalter-Grundkörper 5 eine Abflachung 40 aufweisen kann, so dass das Kühlmittel in dem dadurch gebildeten Längskanal 41 entlang strömt. Der Längskanal wird durch den Außenumfang des abgeflachten Teils des Grundkörpers 5 und den Innenumfang der Führungshülse 2 gebildet.

Statt oder zusätzlich zur Anbringung von einer oder mehreren Abflachungen 40 am Außenumfang des Messerhalter-Grundkörpers 5 können auch die anderen nachfolgend beschriebenen Maßnahmen getroffen werden.

Es ist lediglich gestrichelt dargestellt, dass am Außenumfang des Messerhalter-Grundkörpers 5 zusätzliche, in Längsrichtung vollständig durchgehende Längskanäle 50 vorgesehen sein können oder dass anstatt der Längskanäle 50 am Innenumfang der Führungshülse 2 ein oder mehrere Längskanäle 49 angeordnet sind.

Es kann in einer anderen Darstellung auch vorgesehen sein, dass die Längskanäle 49, 50 einander gegenüberliegen, um so einen möglichst großen Durchlassquerschnitt für das Kühlmittel zu bilden.

Ebenso kann es vorgesehen sein, dass die Längskanäle 49, 50 gleichmäßig am Umfang verteilt angeordnet sind.

Die Figur 9 zeigt als vergrößerte Darstellung eine bevorzugte Ausführungsform eines Messers, wie es bereits schon anhand der Figur 2 erläutert wurde.

In Figur 9 ist der Schneidkopf 7 vergrößert dargestellt, wo erkennbar ist, dass die Schneidfläche 46 schräg verlaufend angeordnet ist und oberhalb einer Freifläche 47 gelagert ist.

An die Freifläche 47 schließt sich im Winkel die Spanfläche 48 an.

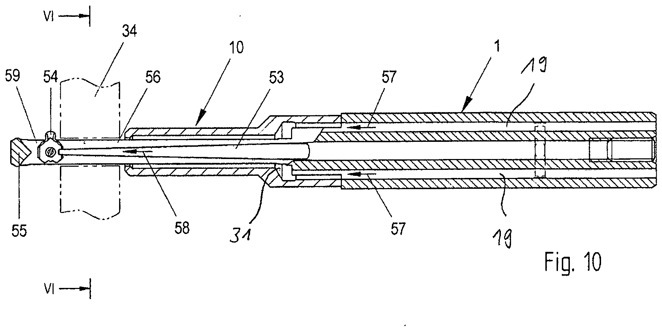

In Figur 10 wird eine Ausführungsform gezeigt, welche nicht vom Schutzumfang der vorliegenden Anmeldung umfasst ist. Es sind jedoch die gleichen Teile und Funktionen mit den gleichen Bezugszeichen versehen.

Die Figur 10 zeigt als weiteres Ausführungsbeispiel ein weiteres Werkzeug zur Entgratung und zum Anbringen von Fasen, bei dem das Messer 54 in radialer Richtung aus einem zylindrisch ausgebildeten Messerhalter 55 drehend gelagert herausgeschoben oder eingezogen wird. Dies erfolgt unter der Kraft einer Biegefeder 53 und die Führung der Biegefeder 53 in einem Längskanal 56 im Messerhalter 55. Das Kühlmittel 57 wird in Pfeilrichtung 58 auf das Messerfenster 59 im Längskanal 56 geführt. Gemäß der Schnittlinie VI-VI in Figur 10 ergibt sich somit die gleiche Durchfluss-Geometrie, wie sie vorstehend anhand der Figur 6 beschrieben wurde. Der Kühlmittelkanal 19 ist als Doppelkanal ausgebildet und die beiden Kanäle sind jeweils einander gegenüberliegend radial auswärts der Mittenbohrung geführt. In der Mittenbohrung ist die Führung der Biegefeder 53 angeordnet.

### Zeichnungslegende

- 1: Werkzeug
- 2: Führungshülse
- 3: Bohrung
- 4: Spannschraube
- 5: (Messerhalter-) Grundkörper
- 6: Messer
- 7: Schneidkopf
- 8: Durchlassöffnung a, b
- 9: Pfeilrichtung
- 10: Kühlmittelhülse
- 11: Ansatz (von 10)
- 12: Ansatz (von 2)
- 13: Aufnahme
- 14: Befestigungsansatz (von 5)
- 15: Ringnut
- 16: Anschlag
- 17: Kühlmitteleinlass
- 18: Pfeilrichtung
- 19: Kühlmittelkanal
- 20: Aufnahmeschlitz a, b, c
- 21: Einschnitt
- 22: Blattkörper
- 23: Messerhals
- 24: Teil (von 5)
- 25: Teil (von 5)
- 26: Querbolzen
- 27: Aufnahmegewinde (von 10)
- 28: Konus (von 10)
- 29: Konusansatz
- 30: Freiraum
- 31: Ringraum
- 32: Pfeilrichtung
- 33: Durchflusskanal
- 34: Werkstück
- 35: Bohrung
- 36: Spitze (von 5)
- 37: Pfeilrichtung
- 38: Pfeilrichtung
- 39: Pfeilrichtung
- 40: Abflachung
- 41: Längskanal
- 42: Pfeilrichtung a, b
- 43: Durchlassquerschnitt
- 44: Längsrippe (von 6)
- 45: Längsrippe (von 5)
- 46: Schneidkante
- 47: Freifläche
- 48: Spanfläche
- 49: Längskanal (in 2)
- 50: Längskanal (in 5)
- 51: Konusansatz
- 52: Pfeilrichtung
- 53: Biegefeder
- 54: Messer
- 55: Messerhalter
- 56: Längskanal
- 57: Kühlmittel
- 58: Pfeilrichtung
- 59: Messerfenster

## Patentansprüche

1. Miniaturisiertes Entgrat- und/oder Faswerkzeug mit einer zylindrischen Führungshülse (2), in der auswechselbar ein Messerhalter-Grundkörper (5) angeordnet ist, der mindestens einen Aufnahmeschlitz (20, 20a, 20b, 20c) für die Aufnahme und Führung mindestens eines dort angeordneten blattförmigen und entlang seiner Längsachse biegbar ausgebildeten Messers (6) aufweist, welches an seinem vorderen freien Ende einen Schneidkopf (7) mit einem dort angeordneten Entgrat- oder Fasmesser aufweist, wobei in der Führungshülse (2) ein Kühlmittelkanal (19) angeordnet ist, welcher ein Kühlmittel (57) in Richtung des Messerhalters-Grundkörpers (5) leitet, wobei der Messerhalter-Grundkörper (5) im Kühlmittelkanal (19) angeordnet ist und mindestens teilweise in Längsrichtung vom einem Kühlmittel (57) umströmt und/oder durchströmt ist **dadurch gekennzeichnet, dass** das Messer (6, 54) im Aufnahmeschlitz (20, 59) an mindestens zwei gegenüberliegenden Seiten vom Kühlmittel (57) umströmt ist, wobei am vorderen Ende der Führungshülse (2) eine Kühlmittelhülse (10) zur Führung eines Kühlmittels (57) angeordnet ist, welche eine stirnseitige Durchlassöffnung (8, 8a, 8b) zum Austritt des Kühlmittels aufweist.

2. Entgrat- oder Faswerkzeug nach Anspruch 1, **dadurch gekennzeichnet, dass** die Kühlmittelhülse (10) einen zylindrischen Ansatz (11) aufweist, aus dem der Schneidkopf (7) des Werkzeuges herausragt.

3. Entgrat- oder Faswerkzeug nach Anspruch 1 oder 2, **dadurch gekennzeichnet, dass** die Kühlmittelhülse (10) das Werkzeug-Vorderteil in der Art einer Hülse umgibt.

4. Entgrat- oder Faswerkzeug nach einem der Ansprüche 1 bis 3, **dadurch gekennzeichnet, dass** durch die Durchlassöffnung (8, 8a, 8b) sowohl ein in axialer Richtung (42) gerichteter als auch in radialer Richtung (37, 38) gerichteter Kühlmittelstrom ausgestoßen wird.

5. Entgrat- oder Faswerkzeug nach Anspruch 4, **dadurch gekennzeichnet, dass** der die Durchlassöffnung (8, 8a, 8b) der Kühlmittelhülse (10) in axialer Richtung (42) verlassende Kühlmittelstrom gegen eine zu bearbeitende Bohrung (35) gerichtet ist.

6. Entgrat- oder Faswerkzeug nach einem der Ansprüche 1 bis 5, **dadurch gekennzeichnet, dass** der Messerhalter-Grundkörper (5) in axialer Richtung an allen vier Seiten über seinen gesamten Umfang vom Kühlmittel (57) umströmt ist.

7. Entgrat- oder Faswerkzeug nach einem der Ansprüche 1 bis 6, **dadurch gekennzeichnet, dass** die Kühlmittelhülse (10) lösbar auf einem Ansatz (12) der Führungshülse (2) des Werkzeuges befestigt ist.

8. Entgrat- oder Faswerkzeug nach Anspruch 7, **dadurch gekennzeichnet, dass** der Messerhalter-Grundkörper (5) eine Abflachung (40) aufweist, wobei das Kühlmittel (57) durch einen Längskanal (41) strömt, welcher durch den Außenumfang der Abflachung (40) und den Innenumfang der Führungshülse (2) gebildet ist.

9. Entgrat- oder Faswerkzeug nach einem der Ansprüche 1 bis 8, **dadurch gekennzeichnet, dass** das Kühlmittel in axialer Pfeilrichtung (18) durch den zentrischen Kühlmittelkanal (19) nach vorne, gegen die hintere Stirnseite des Messerhalter-Grundkörpers (5) geleitet ist und dort in zwei voneinander getrennte Kühlmittelströme aufteilbar ist, wobei ein unterer Kühlmittelstrom in einen Längskanal (41) einfließt, der durch die Abflachung (40) am Messerhalte-Grundkörper (5) und der gegenüberliegenden Fläche der Führungshülse (2) gebildet ist.

10. Entgrat- oder Faswerkzeug nach Anspruch 9, **dadurch gekennzeichnet, dass** der andere Teil des Kühlmittelstromes in axialer Richtung in den Beginn des Aufnahmeschlitzes (20a) einleitbar ist, in dem das blattförmige Messer (6) bewegbar gelagert ist.

11. Entgrat- oder Faswerkzeug nach einem der Ansprüche 1 bis 10, **dadurch gekennzeichnet, dass** das quer zur Längserstreckung des Grundkörpers (5) ein Querbolzen (26) angeordnet ist, auf den das Messer (6) mit einem Einschnitt (21) greift und dort axial gegen Verschiebung gesichert gehalten ist.

12. Entgrat- oder Faswerkzeug nach einem der Ansprüche 1 bis 11, **dadurch gekennzeichnet, dass** einzelne in Längsrichtung gehende Bohrungen, Rippen oder andere halboffene oder geschlossene Führungskanäle für das Kühlmittel (57) vorgesehen sind.

13. Entgrat- oder Faswerkzeug nach einem der Ansprüche 1 bis 12, **dadurch gekennzeichnet, dass** in dem Grundkörper (5) zwei sich diametral gegenüberliegende Messer (5) angeordnet sind.

14. Entgrat- oder Faswerkzeug nach einem der Ansprüche 1 bis 13, **dadurch gekennzeichnet, dass** das Kühlmittel (57) durch Längskanäle (33) strömt, die durch den Außenumfang des Messerhalter-Grundkörpers (5) und den Innenumfang der Kühlmittelhülse (10) gebildet sind und durch die Durchgangsöffnung (8, 8a, 8b) vor dem Schneidkopf (7) des Messers (6) aus der Kühlmittelhülse (10) ausströmt.

15. Entgrat- oder Faswerkzeug nach einem der Ansprüche 1 bis 13, **dadurch gekennzeichnet, dass** das Kühlmittel (57) durch einen Längskanal (41) strömt, der sich aus dem Außenumfang des Messers (6) und dem Aufnahmeschlitz (20c) im Grundkörper (5) ergibt.

## Claims

1. Miniaturised deburring and/or chamfering tool with a cylindrical guide sleeve (2) in which a blade holder base body (5) is arranged to be replaceable and has at least one receiving slot (20, 20a, 20b, 20c) for receiving and guiding at least one lamellar blade (6) arranged there and designed to be flexible along its longitudinal axis, which on its free front end has a cutting head (7) with a deburring or chamfering blade arranged there, wherein in the guide sleeve (2) is arranged a coolant channel (19) which guides a coolant (57) in the direction of the blade holder base body (5), wherein the blade holder base body (5) is arranged in the coolant channel (19) and a coolant (57) flows around and/or through it at least partly in longitudinal direction, **characterised in that** the coolant (57) flows around the blade (6, 54) in the receiving slot (20, 59) on at least two opposite sides, wherein on the front end of the guide sleeve (2) is arranged a coolant sleeve (10) for guiding a coolant (57) which has an end-face side passage opening (8, 8a, 8b) for discharge of the coolant.

2. Deburring or chamfering tool according to claim 1, **characterised in that** the coolant sleeve (10) has a cylindrical attachment (11), from which the cutting head (7) of the tool projects.

3. Deburring or chamfering tool according to claim 1 or 2, **characterised in that** the coolant sleeve (10) surrounds the front part of the tool like a sleeve.

4. Deburring or chamfering tool according to one of claims 1 to 3, **characterised in that** both a coolant stream directed in axial direction (42) and one directed in radial direction (37, 38) is expelled through the passage opening (8, 8a, 8b).

5. Deburring or chamfering tool according to claim 4, **characterised in that** the coolant stream leaving the passage opening (8, 8a, 8b) of the coolant sleeve (10) in axial direction (42) is directed against a bore (35) to be machined.

6. Deburring or chamfering tool according to one of claims 1 to 5, **characterised in that** the coolant (57) flows around the blade holder base body (5) in axial direction on all four sides over its entire periphery.

7. Deburring or chamfering tool according to one of claims 1 to 6, **characterised in that** the coolant sleeve (10) is attached to be releasable on an attachment (12) of the guide sleeve (2) of the tool.

8. Deburring or chamfering tool according to claim 7, **characterised in that** the blade holder base body (5) has a flattened section (40), wherein the coolant (57) flows through a longitudinal channel (41) which is formed by the outer periphery of the flattened section (40) and the inner periphery of the guide sleeve (2).

9. Deburring or chamfering tool according to one of claims 1 to 8, **characterised in that** the coolant is guided in axial arrow direction (18) through the central coolant channel (19) forwards, against the rear end-face side of the blade holder base body (5) and can be divided there into two coolant streams separated from one another, wherein a lower coolant stream flows into a longitudinal channel (41) which is formed by the flattened section (40) on the blade holder base body (5) and the opposite surface of the guide sleeve (2).

10. Deburring or chamfering tool according to claim 9, **characterised in that** the other part of the coolant stream can be introduced in axial direction into the start of the receiving slot (20a), in which the lamellar blade (6) is mounted to be movable.

11. Deburring or chamfering tool according to one of claims 1 to 10, **characterised in that** a transverse bolt (26), on which the blade (6) engages with a recess (21) and is held there secured against axial displacement, is arranged transversely to the longitudinal extension of the base body (5).
]

12. Deburring or chamfering tool according to one of claims 1 to 11, **characterised in that** individual bores, ribs or other half-open or closed guide channels going in longitudinal direction are provided for the coolant (57).

13. Deburring or chamfering tool according to one of claims 1 to 12, **characterised in that** two diametrically opposite blades (5) are arranged in the base body (5).

14. Deburring or chamfering tool according to one of claims 1 to 13, **characterised in that** the coolant (57) flows through longitudinal channels (33) which are formed by the outer periphery of the blade holder base body (5) and the inner periphery of the coolant sleeve (10) and flows out of the coolant sleeve (10) through the passage opening (8, 8a, 8b) upstream of the cutting head (7) of the blade (6).

15. Deburring or chamfering tool according to one of claims 1 to 13, **characterised in that** the coolant (57) flows through a longitudinal channel (41) which is produced from the outer periphery of the blade (6) and the receiving slot (20c) in the base body (5).

## Revendications

1. Outil d'ébavurage et/ou de chanfreinage miniaturisé avec un manchon de guidage cylindrique (2) dans lequel est disposé de manière remplaçable un corps de base porte-couteau (5) qui présente au moins une fente de réception (20, 20a, 20b, 20c) pour la réception et le guidage d'au moins un couteau (6) disposé à cet endroit, en forme de lame et formé pour pouvoir fléchir le long de son axe longitudinal, qui présente à son extrémité libre avant une tête de coupe (7) avec un couteau d'ébavurage ou de chanfreinage disposé à cet endroit, dans lequel dans le manchon de guidage (2) est disposé un conduit de réfrigérant (19) qui canalise un réfrigérant (57) dans la direction du corps de base porte-couteau (5), dans lequel le corps de base porte-couteau (5) est disposé dans le conduit de réfrigérant (19) et est au moins partiellement entouré et/ou traversé par l'écoulement d'un réfrigérant (57) dans la direction longitudinale,
**caractérisé en ce que** le couteau (6, 54) dans la fente de réception (20, 59) est entouré par l'écoulement de réfrigérant (57) sur au moins deux côtés opposés, dans lequel à l'extrémité avant du manchon de guidage (2) est disposé un manchon de réfrigérant (10) pour guider un réfrigérant (57), qui présente une ouverture de passage frontale (8, 8a, 8b) pour la sortie du réfrigérant.

2. Outil d'ébavurage ou de chanfreinage selon la revendication 1, **caractérisé en ce que** le manchon de réfrigérant (10) présente un embout cylindrique (11) d'où dépasse la tête de coupe (7) de l'outil.

3. Outil d'ébavurage ou de chanfreinage selon la revendication 1 ou 2, **caractérisé en ce que** le manchon de réfrigérant (10) entoure l'élément avant d'outil à la manière d'un manchon.

4. Outil d'ébavurage ou de chanfreinage selon l'une des revendications 1 à 3, **caractérisé en ce qu'à** travers l'ouverture de passage (8, 8a, 8b) est éjecté un écoulement de réfrigérant orienté aussi bien dans une direction axiale (42) que dans une direction radiale (37, 38).

5. Outil d'ébavurage ou de chanfreinage selon la revendication 4, **caractérisé en ce que** l'écoulement de réfrigérant quittant l'ouverture de passage (8, 8a, 8b) du manchon de réfrigérant (10) dans la direction axiale (42) est dirigé vers un perçage à usiner (35).

6. Outil d'ébavurage ou de chanfreinage selon l'une des revendications 1 à 5, **caractérisé en ce que** le corps de base porte-couteau (5) est entouré par l'écoulement de réfrigérant (57) sur toute sa circonférence sur tous les quatre côtés dans la direction axiale.

7. Outil d'ébavurage ou de chanfreinage selon l'une des revendications 1 à 6, **caractérisé en ce que** le manchon de réfrigérant (10) est fixé de manière amovible sur un embout (12) du manchon de guidage (2) de l'outil.

8. Outil d'ébavurage ou de chanfreinage selon la revendication 7, **caractérisé en ce que** le corps de base porte-couteau (5) présente un aplatissement (40), dans lequel le réfrigérant (57) s'écoule à travers un conduit longitudinal (42) qui est formé par la circonférence extérieure de l'aplatissement (40) et la circonférence intérieure du manchon de guidage (2).

9. Outil d'ébavurage ou de chanfreinage selon l'une des revendications 1 à 8, **caractérisé en ce que** le réfrigérant est canalisé dans une direction de flèche axiale (18) à travers le conduit de réfrigérant central (19) vers l'avant, vers le côté frontal arrière du corps de base porte-couteau (5), et est apte à être divisé à cet endroit en deux écoulements de réfrigérant séparés l'un de l'autre, dans lequel un écoulement de réfrigérant inférieur entre dans un conduit longitudinal (41) qui est formé par l'aplatissement (40) sur le corps de base porte-couteau (5) et la surface opposée du manchon de guidage (2).

10. Outil d'ébavurage ou de chanfreinage selon la revendication 9, **caractérisé en ce que** l'autre partie de l'écoulement de réfrigérant est apte à être introduite dans la direction axiale dans le début de la fente de réception (20a) dans laquelle le couteau en forme de lame (6) est monté mobile.

11. Outil d'ébavurage ou de chanfreinage selon l'une des revendications 1 à 10, **caractérisé en ce que** transversalement par rapport à l'extension longitudinale du corps de base porte-couteau (5) est disposée une tige transversale (26) sur laquelle le couteau (6) avec une encoche (21) vient en prise et est bloqué à cet endroit axialement à l'encontre d'un déplacement.

12. Outil d'ébavurage ou de chanfreinage selon l'une des revendications 1 à 11, **caractérisé en ce qu'**il est prévu des perçages, nervures ou autres conduits de guidage semi-ouverts ou fermés individuels s'étendant dans la direction longitudinale pour le réfrigérant (57).

13. Outil d'ébavurage ou de chanfreinage selon l'une des revendications 1 à 12, **caractérisé en ce qu'**il est prévu dans le corps de base (5) deux couteaux (5) diamétralement opposés.

14. Outil d'ébavurage ou de chanfreinage selon l'une des revendications 1 à 13, **caractérisé en ce que** le réfrigérant (57) s'écoule à travers des conduits longitudinaux (33) qui sont formés par la circonférence extérieure du corps de base porte-couteau (5) et la circonférence intérieure du manchon de réfrigérant (10), et sort du manchon de réfrigérant (10) par l'ouverture de passage (8, 8a, 8b) avant la tête de coupe (7) du couteau (6).

15. Outil d'ébavurage ou de chanfreinage selon l'une des revendications 1 à 13, **caractérisé en ce que** le réfrigérant (57) s'écoule à travers un conduit longitudinal (41) qui résulte de la circonférence extérieure du couteau (6) et de la fente de réception (20c) dans le corps de base (5).
